# EUROPEAN PATENT APPLICATION

(11) **EP 1 281 678 A2**
(43) Date of publication of application: **05.02.2003**
(21) Application number: 02077926.0
(22) Date of filing: 18.07.2002
(51) Int. Cl.: C02F 11/18, C02F 11/14

(54) **Process for the treatment of biological sludge generated by the purification of wastewater**

(30) Priority: 26.07.2001 IT MI20011616
(71) Applicant: AGIP PETROLI S.p.A., 00142 Roma (IT); Enitechnologie S.p.A., 20097 San Donato Milanese (Milan) (IT)
(72) Inventor: Pappa, Rosario, 00015 Monterotondo (Rome) (IT); Massetti, Felicia, 00060 Castelnuovo Di Porto (Rome) (IT); Robertiello, Andrea, 00131 Rome (IT); Molinari, Mauro, 16156 Genova (IT)
(74) Representative: De Gregori, Antonella

(57) **Abstract**

A process is described for the treatment of biological sludge generated by the purification of industrial and civil wastewater which comprises the following steps:
(a) acidification of the sludge to a pH ranging from 1.5 to 2.5 and thickening by means of sedimentation;
(b) separation of the thickened sludge and a clarified product;
(c) thermo-chemical treatment of the thickened sludge;
(d) neutralization of the mixture obtained in step (c) to a pH ranging from 5.3 to 6.2;
(e) separation of a solid fraction and a liquid fraction;
(f) drying of the solid fraction obtained in step (e) and recovery of the liquid fraction.

The solid fraction, characterized by a final content of dry product greater than 90%, can be used as an amending substance or fuel, whereas the liquid fraction, characterized by a high biodegradability can be used for the production of biogas or as a carbon and energy source for microorganisms.

## Description

The present invention relates to a process for the treatment of biological sludge (or secondary products) deriving from productive units for the aerobic treatment of wastewater of an industrial and urban origin.

The production of biological sludge deriving from the purification treatment of wastewater is constantly growing throughout the world, due to the increasingly strict regulations which govern the release of effluents in the catchers of hydric products.

The industrial situation is particularly critical, where purification processes must frequently be forced with the removal not only of carbon-based contaminants but also of nitrogenated and phosphorated nutrients.

For example, the quantity of biological sludge generated (after thickening and dewatering operations up to a content of dry product of 18-20%) by the oil-refining industry, frequently exceeds 0.3 Kg/t of crude-oil processed.

The petrochemical industry normally produces biological mud in quantities higher than those obtained from oil refining due to the frequent necessity of also effecting tertiary denitrification and dephosphoration treatment of the effluents.

With the progressive increase in the quantity of biological sludge generated, the problem of its disposal is becoming more and more critical especially in Europe.

All the systems, in fact, currently available for the disposal of overall quantities of biological sludge, estimated at about 50 Million tons/years (18-20% of dry substance) have considerable limitations.

These disposal systems consist of:
- distribution on agricultural soil to exploit its content of amending substances and fertilizers. This method which represents about 38% of the total quantity of sludge produced, is definitely the most economic and potentially correct from an environmental point of view.
   In practice, however, the presence of heavy metals and other pollutants and the seasonal limits of use progressively tend to reduce the quantities used.
- Controlled landfills, together with solid urban waste, if of a civil origin, or together with other non-dangerous waste products, if of an industrial origin.
   Landfills currently represent the disposal method for about 35% of the total biological sludge produced in Europe and the main disposal method for sludge of an industrial origin.
   The high water content and high fermentability, however, which characterize sludge create problems (generation of percolate) in the running of controlled landfill plants.
   These problems are oriented towards municipal regulations which will limit or prohibit the discharge of biological sludge as such in landfills.
- Incineration of waste products in thermo-destruction plants or cement plants. This method, which represents about 20% of the total biological sludge produced, requires a preliminary drying of the sludge and is restricted by the high cost and limited availability of suitable plants.

Due to the difficulties outlined above, it would be extremely advantageous to reduce, at limited costs, the quantity of material to be disposed of.

This objective can be achieved by subjecting biological mud to anaerobic digestion processes which:
(i) transform part of the organic substance into biogas rich in methane and therefore fuel;
(ii) improve the rheology of the digested sludge which can be more easily dehydrated;
(iii) significantly reduce the number of pathogenic agents typically present in sludge.

At present, about 50% of the biological sludge generated in Europe by the purification of effluents of urban origin, is anaerobically stabilized (R.D. Davis and J.E. Hall. 1997. Water Pollution Control 7,9-17).

The anaerobic digestion of sludge, however, normally requires treatment times of over 20 days (U. Neis, K. Nickel and A. Tiehm. 2000, Water Sci. Technol. 42(9): 73-80). These processes therefore require the use of plants of considerable dimensions for the treatment of large volumes of sludge.

On the other hand, the reduction in the operating volumes of anaerobic digesters cannot be easily obtained by increasing the content of dry substance in the sludge.

Biological sludge in fact is commonly removed from the decanters of water treatment plants with a content of dry substance ranging from 1.5 to 3.0%.

The additional thickening requires costly solid/liquid separators and the use of cationic polymers which serve to neutralize the anionic charges which characterize the surface of the sludge particles (J. Kopp and N. Dichtl. 2000, Water Sci. Technol. 42(9): 141-149). Both solutions are economically onerous and the cationic polymers have a poor biodegradability with anaerobic digestion.

Furthermore, it has been demonstrated that the separation of the organic substance in a digester fed with biological sludge passes from 45% to 34%, when the water content of the substrate is reduced from 97% to 89% (S. Fujishima, T. Mijahara and T. Noike. 2000, Water Sci. Technol. 41(3):119-127).

The limited separations of the organic substances obtained by the anaerobic treatment of biological sludge have oriented research in the last twenty years towards the preparation of pretreatment methods of biological sludge capable of improving its digestibility.

Processes have therefore been proposed in the art, which are based on the hydrolytic pretreatment of biological sludge by means of:

### (A) Thermal cellular lysis.

This method consists in heating the biological sludge, optionally thickened, to temperatures ranging from 130 to 210°C, at the corresponding pressures, for times generally ranging from 30 to 120 minutes, before being sent to an anaerobic digester.

This approach, which has also been developed on a demonstrative scale, allows the anaerobic digestion times to be reduced from 20 to 17 days and the organic substance, expressed as COD of 59% to be separated (U. Kepp et al. 2000, Water Sci. Technol. 42(9):89-96).

### (B) Mechanical cellular lysis

Another strategy used for the pretreatment of sludge consists in the disintegration of sludge using mechanical means (M. Dohanyes et al. 2000. Water Sci. Technol. 42(9):57-64) or with ultrasounds (U. Neis et al. 2000. 42(9):73-90) or with enzymes (H. Rintala and B.K. Ahring. 1994. App. Microbiol. Biotechnol. 40: 916-919).

All these approaches however have only rarely passed the laboratory experimentation phase.

### (C) Thermo-chemical cellular lysis

This method consists in coupling the thermal treatment of sludge (100-210°C) with the catalytic action exerted by acids or alkalis. The main result of a thermo-chemical pretreatment is a strong dissolution of the biological sludge, which can exceed 70% of the organic substance expressed as COD (S.P. Delgenès et al. 2000. Water Sci. Technol. 41(3):137-144).

This thermo-chemical pretreatment however has disadvantages linked to the formation of high molecular weight substances (melanoids) soluble within wide pH ranges.

These products derive from the reaction between aminoacids and reducing sugars (Maillard Reaction), which takes place in the pretreated biological sludge with significant kinetics starting from 100°C and is catalyzed by acids or alkalis.

The products formed are typically brown-coloured, are not degradable in anaerobiosis and have a toxic action on the methanogen microbial consortia (J.A. Müller. 2000, Water Sci. Technol. 42(9):167-174).

It has now been found, according to the present invention, that by acidifying biological sludge at the moment of removal, before thermo-chemical treatment and by effecting the neutralization of the thermo-chemically treated sludge within a well-defined pH range, it is possible to overcome the disadvantages of the known art discussed above.

These reaction conditions allow substantial advantages, in particular:
(1) a significant reduction (equal to or higher than 70%) in the volume of sludge to be disposed of;
(2) the production of a solid end-fraction with a content of dry substance higher than 90%, without pathogenic agents and with a reduced content of toxic metals; this fraction can therefore be used as an agricultural amending substance or as fuel or, if necessary, disposed of in landfills as inert material as it has no putrescent substances;
(3) the production of a sterile liquid fraction, without melanoids and characterized by a high biodegradability, which can be used for the production of biogas or as a carbon and energy source for micro-organisms; and
(4) a reduction in the operative volumes of thermo-chemical treatment plants and anaerobic digesters with a considerable economic saving with respect to current techniques.

In accordance with this, an objective of the present invention relates to a process for the treatment of biological sludge deriving from productive aerobic treatment units of wastewater which comprises the following steps:
(a) acidification of the biological sludge to a pH ranging from 1.5 to 2.5 and thickening by means of sedimentation;
(b) separation of the thickened sludge and a clarified product;
(c) thermo-chemical treatment of the thickened sludge at 130-170°C, for 30-90 minutes;
(d) neutralization of the mixture obtained in step (c) to a pH ranging from 5.3 to 6.2;
(e) separation of a solid fraction with a content of dry substance equal to or higher than 18% and a liquid fraction with a COD ranging from 9.0 to 50.0 g/l;
(f) drying of the solid fraction obtained in step (e) to a content of dry product of about 90% and recovery of the liquid fraction.

The biological sludge which can be used in the process of the present invention can derive from the productive units for the aerobic treatment of civil and industrial wastewater, such as that deriving from the petrochemical and oil refining industry.

This sludge, which has a content of dry substance generally ranging from 0.5 to 5% by weight, is acidified, at temperatures close to room values (20-30°C), with the use of a mineral acid, preferably hydrochloric acid, up to a pH value ranging from 1.5 to 2.5, preferably equal to 2.0.

Under these conditions of high concentration of H₃O⁺ ions, the following phenomena take place on the part of the biological sludge:
- neutralization of the negative charges which typically characterize the particles of biological material consisting of cells and hexopolysaccharides. The material, at its iso-electric point, becomes more easy to separate from water;
- detachment of metallic ions, adhering with short radius ionic bonds to the particles of sludge, which become more soluble in water;
- partial deactivation of the pathogenic agents possibly present in the sludge;
- inhibition of all spontaneous fermentation processes of the material which can be transferred, stored, settled without any substantial modification of the organic substance presence.

As a consequence of the phenomena described, the acidified biological sludge is thickened, preferably by means of sedimentation, obtaining a solid with a content of dry substance approximately double with respect to the initial value and a clarified product with a COD ranging from 0.3 to 3 g/l.

The thickened biological sludge, with a content of dry substance ranging from 1 to 10%, is subsequently subjected to heating within a temperature range of 130 to 170°C, for a time ranging from 30 to 90 minutes, preferably to 150°C for 60 minutes.

During this period the following phenomena take place on the part of the biological sludge:
- hydrolysis of the high molecular weight components of which the material is typically formed (proteins, nucleic acids, hexopolysaccharides and cellular wall polymers) with the formation of simpler molecules (peptides, aminoacids, fatty acids, volatile acids, reducing sugars, aminosugars, etc.) ;
- complete deactivation of the pathogenic agents;
- dissolution of the toxic and non-toxic metals;
- formation of soluble substances with a high molecular weight (melanoids) by the reaction between aminoacid and glucosidic functions.

The thermo-chemical treatment can be carried out in equipment operating batchwise or, preferably, in continuous and is prolonged until a dissolution level of the organic substances present in the sludge ranging from 40 to 90% of the total.

The material resulting from the thermo-chemical treatment is neutralized until pH values ranging from 5.3 to 6.2 are reached.

For this purpose, alkalis can be used such as sodium hydroxide, potassium hydroxide or calcium hydroxide, the latter being preferred. Operating within these pH values, the following phenomena take place:
- precipitation of the melanoids synthesized during the thermo-chemical treatment and
- creation of favourable conditions (hydrogen ionic concentration, alkaline reserve, salinity, solubility of nutritive sources containing carbon, nitrogen, phosphorous and oligo-elements) for the use of the soluble fraction as growth substrate for micro-organisms.

This operation can be effected in equipment operating in continuous or batchwise and capable of maintaining the sterility.

The material thus neutralized is then subjected to a solid/liquid separation, which can be carried out in continuous or batchwise by means of sedimentation, filtration or, preferably, centrifugation.

With particular respect to the centrifugation phase, the equipment selected is a decanter centrifuge, as it is considered as being the most suitable for this application.

A solid is thus obtained, characterized by a content of dry substance ranging from 18 to 50% and a limpid liquid with a high content of biodegradable organic substances characterized by a COD ranging from 9 to 50 g/l.

The solid fraction obtained as described above, can be easily dried to a content of dry substance of over 90%.

For this purpose, the common equipment of the known art can be used, such as drum driers, spray driers, thin layer evaporators and turbo-driers.

The dry solid thus obtained, optionally pelletized to increase the apparent density and reduce the dustiness, can be used as an amending substance in agriculture and/or as a fuel.

It is, in fact, free of pathogenic agents, stable to preservation also for prolonged times, is not putrescible, is free of harmful components for the fertility of the land and with good amending characteristics for agriculture due to its content of organic carbon, nitrogen, phosphorous, potassium and calcium.

The liquid fraction obtained as described above can be used for producing biogas via anaerobic digestion. The preferred reactors are those operating in continuous under mesophily conditions with microbial flora immobilized on inert carriers (filters) or in the form of granules (Up-flow Anaerobic Sludge Blanket).

In this type of reactor, the hydraulic retention time can be regulated within a range of 2 to 4 days and the space charges from 3 to 7 Kg of COD/m³, per day, obtaining COD separations ranging from 70 to 90%. Operating under these conditions the following phenomena take place:
- transformation of the organic substance to biogas with a methane content ranging from 70 to 90% (vol./vol.);
- precipitation, in the form of inert sulfides, of the quantity of toxic metals dissolved above;

As an alternative to the production of biogas, the liquid fraction can be used as a carbon source for the growth of micro-organisms, such as denitrifying and dephosphorating micro-organisms, used in the tertiary purification treatment of wastewater.

The samples of biological sludge, as removed from the purification plants, were characterized in terms of total solids (TS), volatile solids (VS) and fixed residue after calcination at 550°C (FR).

Each sample was then centrifuged at 3000 x G determining with respect to the surnatant, the total solids, the fixed residue at 550°C and, by difference, the volatile solids.

The procedure described in Standard Methods was adopted for solid and semi-solid samples, using method Nr. 2540 G.

The sediment obtained from the centrifugation, which represents the quantity of suspended solids (SS) in the initial sludge, was dried at 105°C, thus determining the water content and then analogously to what is described for the surnatant, fixed residue and volatile solids.

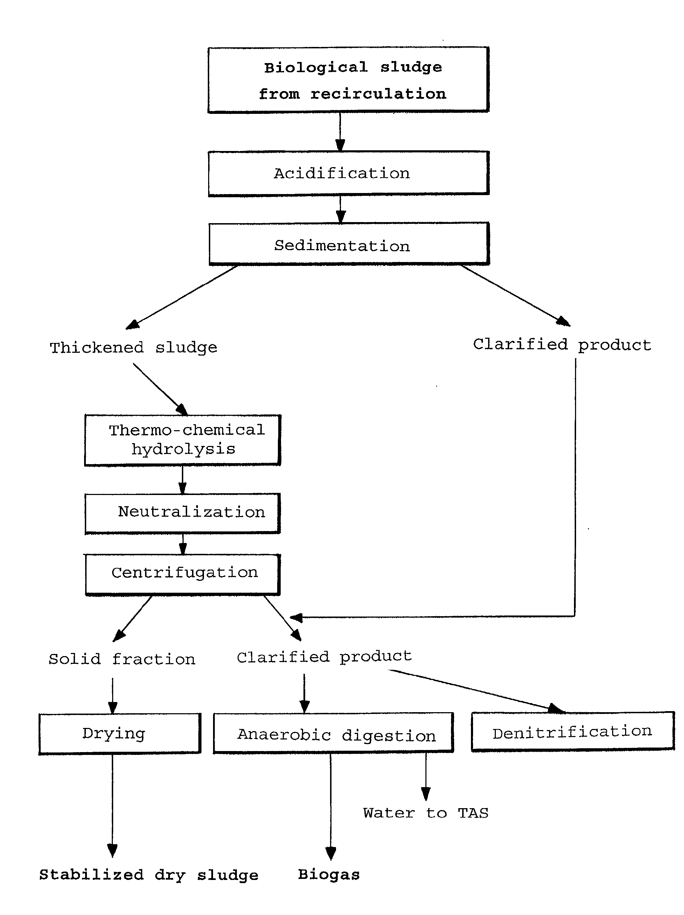

Figure 1: schematic description of the process according to the invention.

The following examples are illustrative but do not limit the scope of the invention described.

### EXAMPLES

A biological sludge was used in the experimentation, removed from the recirculation circuit of sludge in a refinery wastewater treatment plant, having the characteristics specified in Table 1:

**Table 1**

| Product as such | |
|---|---|
| Dry substance | 1.57% |
| Water | 98.43% |
| pH | 6.30 |

| Dry substance | |
|---|---|
| Volatile substances | 34.00% |
| Ashes | 66.00% |
| Nitrogen | 2.13% |
| Carbon | 13.15% |
| Hydrogen | 2.39% |
| Zinc | 220 (ppm) |
| Nickel | 19 (ppm) |
| Copper | 85 (ppm) |
| Chromium | 64 (ppm) |
| Lead | 12 (ppm) |
| Potassium | 16270 (ppm) |

### EXAMPLE 1

Two aliquots (1 litre) of biological sludge with the characteristics indicated in Table 1 are put into two equal settlers. One is previously acidified to pH 2.0 by means of (10 ml) concentrated HCl (37%), whereas the other is used without any modification.

After 4 hours of sedimentation at room temperature, the clarified products are separated and the thickened sediments are analyzed obtaining the data specified in Table 2.

**Table 2**

| Analysis | Settled at pH | 6.3 Settled at pH 2.0 |
|---|---|---|
| Material as such | | |
| Dry substance | 2.29(%) | 3.40(%) |
| Water | 97.71 (%) | 96.60 (%) |

| Dry substance | | |
|---|---|---|
| Volatile solids | 46.00 (%) | 55.00 (%) |
| Ashes | 54.00 (%) | 45.00 (%) |
| Nitrogen | 3.57 (%) | 4.00 (%) |
| Carbon | 23.70 (%) | 24.96 (%) |
| Hydrogen | 3.41 (%) | 3.84 (%) |
| Zinc | 213 (ppm) | 185 (ppm) |
| Nickel | 20 (ppm) | 19 (ppm) |
| Copper | 83 (ppm) | 77 (ppm) |
| Chromium | 61 (ppm) | 55 (ppm) |
| Lead | 14 (ppm) | 13 (ppm) |
| Potassium | 9970 (ppm) | 8950 (ppm) |

As can be seen from Table 2, the sedimentation of the sludge acidified to pH 2 creates a significant increase in the content of dry substance and volatile solids in the thickened material. This results in an advantageous reduction in the volumes of the materials to be treated and energy requirement in the subsequent hydrolysis phase.

With respect to the subsequent use as diluent in the biomethanation phase, it can be observed that the clarified product removed from the settler containing acidified sludge is characterized by a COD equal to 1 g/l.

### EXAMPLE 2

100 Kg of thickened biological sludge at pH 2, produced as described in Example 1, are put into an autoclave equipped with mechanical stirring, whose temperature is rapidly raised to 150°C. The thickened sludge is maintained at this temperature for 60 minutes and is then rapidly cooled to room temperature.

Two aliquots (50 Kg) of thermo-chemically treated material are removed from the reactor: the first is neutralized to pH 7.0 and the other to pH 5.8 by the addition of calcium hydroxide (320 g for the neutralization to pH 7.0 and 250 g to increase the pH value to 5.8).

The two samples thus obtained are centrifuged at 3000 x G obtaining a solid fraction and a limpid liquid fraction.

The surnatant obtained after neutralization to pH 7.0 is characterized by a COD of 21 g/l and is used for the test in an anaerobic reactor described in Example 3.

The following products are obtained from centrifugation of the material at pH 5.8:
- a light brown-coloured limpid liquid fraction with a COD of 20 g/l; and
- a solid fraction whose characteristics are specified in Table 3.

**Table 3**

| | |
|---|---|
| Dissolution yield for volatile solids | 57.00 % |
| Dissolution yield for dry substance | 65.00 % |

| Composition as such | |
|---|---|
| Dry substance | 25 % |
| Water | 75 % |

| Composition dry substance | |
|---|---|
| Volatile solids | 60.00 % |
| Ashes | 40.00 % |
| Nitrogen | 4.01 % |
| Carbon | 24.96 % |
| Hydrogen | 3.84 % |
| Zinc | 158 (ppm) |
| Nickel | 17 (ppm) |
| Copper | 68 (ppm) |
| Chromium | 54 (ppm) |
| Lead | 9 (ppm) |
| Potassium | 2500 (ppm) |
| Phosphorous | 19000(ppm) |

### EXAMPLE 3

Two anaerobic reactors with an UASB (Up-flow Anaerobic Sludge Blanket) configuration are inoculated (30% of the initial useful volume) with anaerobic sludge and fed with a specific medium (PREMM - Pre-reduced Methanogenic Medium) for the growth of methanogenic microbial consortia. The two reactors are run continuously under mesophily conditions (35°C) until the stationary regime condition is reached (steady state) indicated in Table 4.

**Table 4**

| | |
|---|---|
| COD at the inlet (g/l) | 11.0 |
| COD at the outlet (g/l) | 2.5 |
| Space charge (Kg COD/m³, day) | 2.93 |
| pH at the inlet | 7.0 |
| pH at the outlet | 7.1 |
| Biogas produced (vol/vol reactor/day) | 0.7 |
| Methane concentration in the biogas | 80 % |

Two substrates characterized by a COD ranging from 11 to 12 g/l and a pH of 5.8 and 7.0 respectively, were prepared by respectively diluting the liquid fractions obtained as described in Example 2 with the clarified product obtained from the sedimentation at acid pH, described in Example 1.

The two substrates thus prepared are used, in progressive amounts, to substitute the PREMM in the feeding of the anaerobic reactors.

After 32 days of continuous running, having reached an amount of in-going COD consisting of 60% of PREMM and 40% of substrates obtained from the thermo-chemical treatment of biological sludge, the two anaerobic reactors have a completely different behaviour.

The reactor fed with the substrate neutralized to pH 7.0 shows clear signs of intoxication consisting for example of a progressive decrease in the biogas produced, a strong increase in alkalinity in the out-going liquid and an unbalance of pH towards progressively increasing values.

The reactor fed with the substrate neutralized to pH 5.8, on the contrary, continues to function in perfect stability with yields entirely analogous to those obtained with PREMM alone. It is therefore decided to continue with the progressive substitution of the in-coming COD until the total elimination of the PREMM.

After fifteen days of running under stationary conditions of the digester fed exclusively with the substrate obtained from the thermo-chemical treatment of the sludge neutralized to pH 5.8, the data specified in Table 5 are registered.

**Table 5**

| | |
|---|---|
| COD at the inlet (g/l) | 11.3 |
| COD at the outlet (g/l) | 3.0 |
| Space charge (Kg COD/m³, day) | 2.96 |
| pH at the inlet | 5.8 |
| pH at the outlet | 7.1 |
| Biogas produced (vol/vol reactor/day) | 0.77 |
| Methane concentration in the biogas | 75 % |

### EXAMPLE 4

Example 3 was repeated, increasing the organic charge fed to the digester, acting on the flow-rate of hydrolyzed product at the inlet, until a new stationary state is reached, characterized by a space charge of 5 Kg of COD/m³ day (with respect to the value of 2.96 adopted in Example 3).

This condition is kept constant without observing any type of unbalance in the continuous running over the time.

The operating data registered in this new stationary state condition are specified in Table 6.

**Table 6**

| | |
|---|---|
| COD at the inlet (g/l) | 11.3 |
| COD at the outlet (g/l) | 3.3 |
| Space charge (Kg COD/m³, day) | 5.0 |
| pH at the inlet | 5.8 |
| pH at the outlet | 7.0 |
| Biogas produced (vol/vol reactor/day) | 1.3 |
| Methane concentration in the biogas | 75 % |

On comparing the results indicated in Tables 5 and 6, it can be seen how, with an increase in the organic charge, the composition of methane in the biogas produced, whose quantity increases with an increase in the space charge, remains unaltered.

### EXAMPLE 5

The solid fraction obtained by thermo-chemical treatment of the sludge, followed by neutralization to pH 5.8 and centrifugation, as described in Example 2, is fed to a thin layer evaporation plant having the necessary equipment for drying the above biological sludge.

The content of dry substance of this fraction is regulated by acting on the operating conditions of centrifuge decanter (flow-rate at the inlet and number of screw revs/rotor ratio) so that it is equal to 18.5%.

The operating conditions of the plant are:
- feeding rate regulated at 90 Kg/h and
- evaporation temperature at 180°C

From the drying of the thermo-chemically pretreated sludge, a material is obtained, characterized by a content of dry substance and ashes equal to 97.7% and 40% respectively, an apparent density of 724 Kg/m³ and a thermal value lower than 3800 KCal/Kg.

### EXAMPLE 6 (comparative)

Using the drying plant described in Example 5 and operating under the same conditions, biological sludge is dried, thickened to a content of dry substance equal to 18.5% by the addition of cationic polymers and subsequent centrifugation.

From the drying of the non-treated biological sludge, a material is obtained, characterized by a content of dry substance and ashes equal to 69.5% and 63% respectively, an apparent density of 645 Kg/m³ and a thermal value lower than 2750 KCal/Kg.

### EXAMPLE 7

A sample of sludge is removed from the denitrification section of a wastewater treatment plant of a petrochemical factory, and subjected to bacterioscopic analysis. The total heterotrophic microbial population proves to be equal to 2.3x107 UFC/ml, whereas the denitrifying population is equal to 1.7x107 UFC/ml.

Three identical reactors, equipped with mechanical stirring and a water seal, operating at room temperature, are filled with natural water, buffered to pH 7.4 with a phosphate buffer, containing 2.3 g/l of NaCl and 35 mg/l of nitrate ion, added as potassium salt.

The three reactors thus prepared are degassed by flushing with helium for 30 minutes and inoculated with denitrifying sludge in a ratio of 2% by volume.

No further additions are effected in the first reactor, which operates as reference blank.

Sodium acetate is added to the second reactor, in such a quantity as to obtain a concentration corresponding to 200 mg/l expressed in terms of COD. This reactor simulates the operating conditions of a denitrification plant in which, according to the common procedure, methyl acetate or alcohol is added (normally in a COD/nitrate ratio equal to 5) as carbon source for the denitrifying flora.

The liquid fraction of hydrolyzed sludge, neutralized to pH 5.8 and centrifuged as described in Example 2, is added to the third reactor, in such a quantity as to obtain a concentration corresponding to 200 mg/l expressed in terms of COD.

The three reactors are left under slight stirring at room temperature, periodically analyzing the concentration of nitrate ion in the solution.

After 72 hours, the following data were obtained:
Reactor 1: negligent reduction in the concentration of nitrate (residual concentration 34 ppm).
Reactor 2: reduction in the concentration of nitrate to 4 ppm.
Reactor 3: reduction in the concentration of nitrate to 2 ppm.

The results obtained confirm the possibility of using the surnatant produced by the hydrolysis of biological sludge as carbon source for denitrifying flora, in substitution of sodium acetate (or methyl alcohol), with a consequent reduction in the treatment cost.

## Claims

1. A process for the treatment of biological sludge generated by the purification of wastewater, which comprises the following steps:
(a) acidification of the biological sludge with an inorganic acid to a pH ranging from 1.5 to 2.5 and thickening by means of sedimentation;
(b) separation of the thickened sludge and a clarified product;
(c) thermo-chemical treatment of the thickened sludge at a temperature ranging from 130 to 150°C, for a time ranging from 30 to 90 minutes;
(d) neutralization of the mixture obtained in step (c) to a pH ranging from 5.3 to 6.2;
(e) separation of a solid fraction and a liquid fraction;
(f) drying of the solid fraction obtained in step (e) and recovery of the liquid fraction.

2. The process according to claim 1, wherein the biological sludge derives from the productive aerobic treatment units of civil or industrial wastewater.

3. The process according to claim 2, wherein the biological sludge derives from the productive aerobic treatment units of wastewater from refineries and petrochemical plants.

4. The process according to claim 1, wherein in step (a) the acidification is carried out with hydrochloric acid at a pH equal to 2.

5. The process according to claim 1, wherein in step (a) the acidification is carried out at room temperature.

6. The process according to claim 1, wherein in step (d) the neutralization is carried out using an alkaline compound selected from sodium hydroxide, potassium hydroxide or calcium hydroxide.

7. The process according to claim 1, wherein in steps (b) and (e) the separation is carried out by centrifugation, sedimentation or filtration.

8. The process according to claim 7, wherein the separation is carried out by means of centrifugation.

9. The process according to claim 1, wherein the solid fraction obtained in step (e) has a content of dry substance ranging from 18% to 50%.

10. The process according to claim 1, wherein the liquid fraction obtained in step (e) has a COD ranging from 9.0 to 50.0 g/l.

11. The process according to claim 1, wherein in step (f), the drying is carried out by means of drum driers, spray driers, thin layer evaporators and turbo-driers.

12. The process according to claim 1, wherein the dried solid is **characterized by** a content of dry substance higher than 90%.

13. The process according to claim 1, wherein the liquid fraction recovered in step (f) is used as carbon and energy source for the growth of micro-organisms.

14. The process according to claim 13, wherein the micro-organisms are selected from denitrification micro-organisms.

15. The process according to claim 1, wherein the liquid fraction recovered in step (f) is used in anaerobic digestion processes for the production of biogas.

16. The process according to claim 1, wherein the solid fraction obtained in step (f) is used as an amending substance in agriculture and/or fuel.

17. The process according to claim 16, wherein the dry solid fraction is in pelletized form.
